# EUROPEAN PATENT APPLICATION

(11) **EP 1 753 162 A1**
(43) Date of publication of application: **14.02.2007**
(21) Application number: 06254134.7
(22) Date of filing: 07.08.2006
(51) Int. Cl.: H04J 3/06, G06F 1/12

(54) **Synchronization of data streams from data acquisition processors using a shared signal**

(30) Priority: 09.08.2005 US 199859
(71) Applicant: General Electric Company, Schenectady, NY 12345 (US)
(72) Inventor: Wolfe, Robert T., Elm Grove, WI 53122 (US); Hernke, David G., Sussex, WI 53089 (US); Rozman, Christopher J., Waukesha, WI 53188 (US); Schieble, David L., Oconomowoc, WI 53066 (US); Anstedt, Howard J., Milwaukee, WI 53208 (US); Roeber, Russel R., Cedarburg, WI 53012 (US)
(74) Representative: Bedford, Grant Richard

(57) **Abstract**

The present invention is a system and method of synchronizing data streams from data acquisition processors (120,135). The system and method utilizes a shared signal by data acquisition processors (120,135) to trigger a measuring of the data sampling signal. These measurements are averaged and compared to an expected phase, whereby either of the data acquisition processor's (120,135) data delivery rate are adjusted if the compound shows a difference greater than a maximum drift rate.

## Description

The invention relates to the field of data processing and display. More particularly, the invention relates to the field of synchronizing processed data streams.

When data acquisition processors are used to generate data consumed by an administrative processor, the data sets coming from the data acquisition processors need to be time aligned, even though they are generated from separate processors, each having their own CPU clock. Without correction, the data sets would drift apart from each other, because the crystals used to generate the CPU clock for each processor are not exactly the same frequency.

Current solutions of compensating for this drift include dropping a sample from one of the data streams every so often. However, this type of approach results in large data discontinuities at the point of adjustment, and significant amounts of drift before it is applied. Complex, downstream adjustments to the data are also required.

In understanding the present invention, it will be beneficial to note that a PLL includes a voltage- or current-driving oscillator that is constantly adjusted to match in phase (and thus lock onto) the frequency of an input signal. In addition to stabilizing a particular communications channel (keeping it set to a particular frequency), a PLL can be used to generate a signal, modulate or demodulate a signal, reconstitute a signal with less noise, or multiply or divide a frequency.

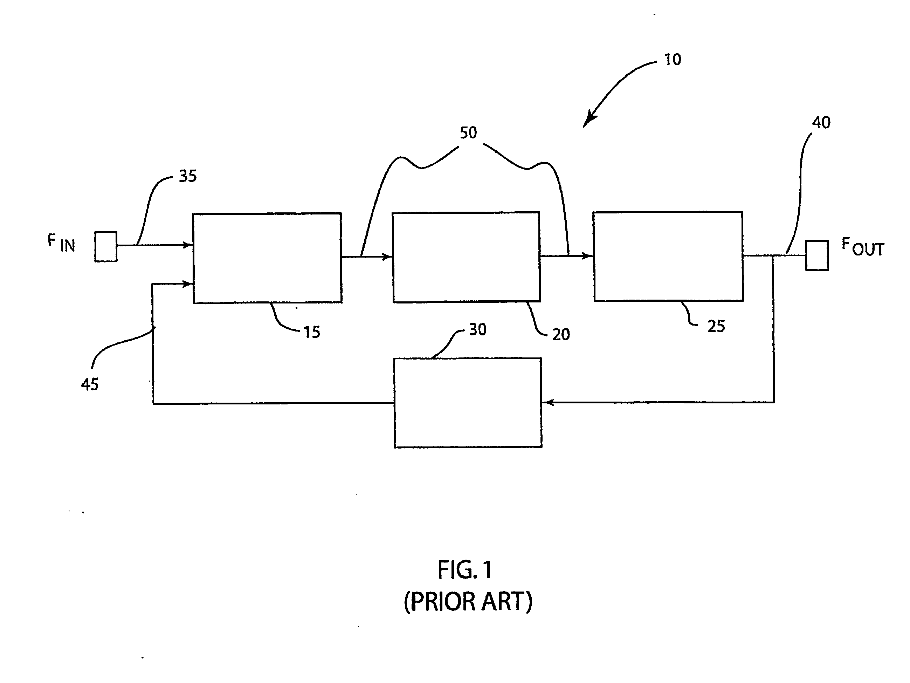

Fig. 1 illustrates the classic PLL 10 configuration. The phase detector 15 is a device that compares input frequencies 35, 40, generating a phase error signal 50 that is a measure of their phase difference (if, for example, the input frequencies 35, 40 differ in frequency, it gives a periodic output at the difference frequency). If *f*_{IN} 35 doesn't equal *f*_{VCO} 40, the phase-error signal 50, after being filtered in the loop filter 20 and amplified in the voltage controlled oscillator (VCO) 25, causes the *f*_{VCO} 40 frequency to deviate in the direction of *f*_{IN} 35. If conditions are right, the *f*_{VCO} 40 will quickly "lock" to *f*_{IN} 35 maintaining a fixed relationship with the input signal 35. At that point, the filtered output frequency (Fout) 40 of the phase detector 25 is a dc signal, and the control input to the VCO 25 is a measure of the input frequency 35, with obvious applications to tone decoding (used in digital transmission over telephone lines) and FM detection. The VCO 25 output Fout 40 is a locally generated frequency equal to *f*_{IN} 35, thus providing a clean replica of *f*_{IN} 35, which may itself be noisy. Since the VCO 25 output Fout 40 can be a triangle wave, sine wave, or any other type of wave, this provides a nice method of generating a sine wave locked to a train of pulses.

In one of the most common applications of PLLs 10, a modulo-n counter 30 is hooked between the VCO 25 output Fout 40 and the phase detector 15, thus generating a multiple of the input reference frequency *f*_{IN} 35. This is an ideal method for generating clocking pulses at a multiple of the power-line frequency for integrating A/D converters (dual-slope, charge-balancing), in order to have infinite rejection of interference at the power-line frequency and its harmonics. It also provides the basic technique of frequency synthesizers.

Various aspects and embodiments of this invention make use of the design principles behind PLLs 10, which is considered prior art. However, PLL 10 principles and techniques are applied in a novel way.

Various aspects and embodiments of the present invention relate to a system and method of synchronizing data streams from data acquisition processors. The system and method utilizes a common signal to data acquisition processors to trigger a measuring of the data sampling signal. These measurements are averaged and compared to an expected phase, whereby either of the data acquisition processor's data delivery rate are adjusted if the compound shows a difference greater than a maximum drift rate.

Various aspects and embodiments of the present invention include a method of synchronizing a set of data streams, which comprises routing a common signal to a first data acquisition processor and a second data acquisition processor, wherein the common signal triggers the first and second data acquisition processors to take a plurality of phase measurements of a sampling signal, averaging the plurality of phase measurements, comparing the averaged phase measurements of each of the first and second data acquisition processors to an expected phase, and adjusting a digital control signal of either one of the first and second data acquisition processors when the difference between the average phase measurement of either data acquisition processor and the expected phase exceeds a maximum drift rate, wherein the common signal is generated by an administrative processor.

Various aspects and embodiments of the present invention include a system for synchronizing a set of data streams, which comprises a first data acquisition processor and a second data acquisition processor, the first and second data acquisition processors configured to receive a common signal, and an administrative processor configured to receive a data signal from each of the data acquisition processors and to generate the common signal, wherein the first and second data acquisition processors take a plurality of phase measurements of a sampling signal and average the phase measurements when the common signal is received, and further wherein the first and second data acquisition processors compare the average phase measurements to an expected phase, such that a digital control signal of either one of the first and second data acquisition processors is adjusted when the difference between the average phase measurements and the expected phase exceeds a maximum drift rate.

Various aspects and embodiments of the present invention include a method of synchronizing a set of data streams, which comprises generating a common signal with an administrative processor, routing the common signal to a first data acquisition processor and a second data acquisition processor, wherein the common signal triggers the first and second data acquisition processors to take a plurality of phase measurements of a sampling signal, averaging the plurality of phase measurements, comparing the averaged phase measurements of each of the first and second data acquisition processors to an expected phase, and adjusting a digital control signal of either one of the first and second data acquisition processors when the difference between the average phase measurement of either data acquisition processor and the expected phase exceeds a maximum drift rate.

Various aspects and embodiments of the present invention will now be described in connection with the accompanying drawings, in which:
Figure 1 is a block diagram illustrating a Phase Locked Loop (PLL) circuit.
Figure 2 is a block diagram illustrating a system according to an embodiment of the present invention.
Figure 3 is a graphical representation illustrating waveforms according to an embodiment of the present invention.
Figure 4 is a flow chart illustrating a method according to an embodiment of the present invention.

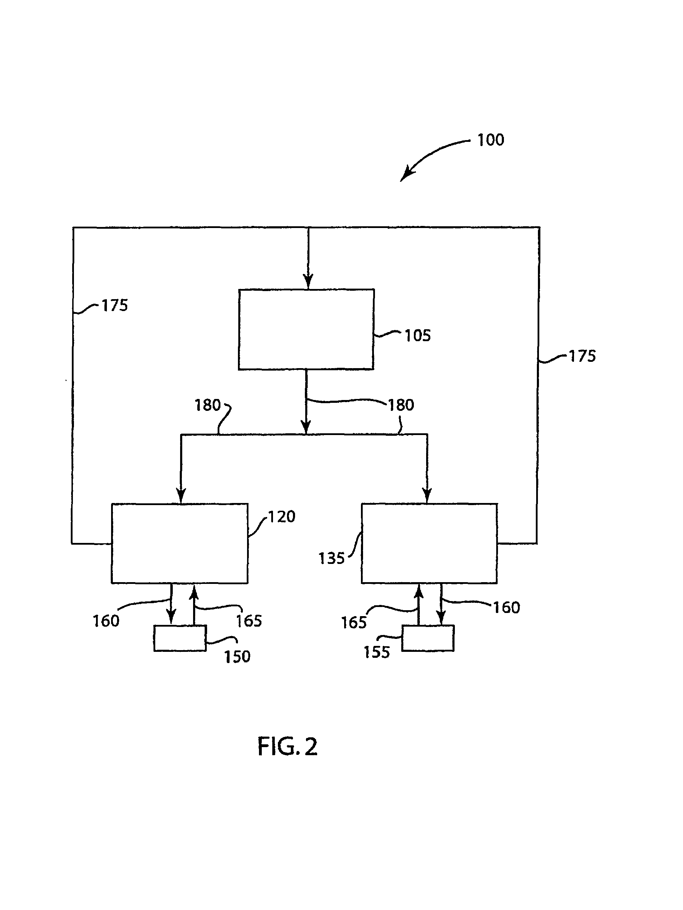

As shown in Figure 2, a common signal 180 is routed to a set of data acquisition processors 120, 135. It should be understood that embodiments of the invention may include more than two data acquisition processors 120, 135 and that Figure 2 depicts the preferred embodiment including two data acquisition processors 120, 135. The common signal 180 is used by each data acquisition processor 120, 135 to trigger a measurement of the phase of the signal used in its data sampling. These phase measurements are averaged across a number of iterations, and then compared to an expected phase value. If the difference between the measured and expected phase exceeds a maximum drift rate, an adjustment is made to the data acquisition processor's 120, 135 data delivery rate to compensate. In this manner, each data acquisition processor's 120, 135 data delivery rate may drift back or forth, but will be centered around a rate dictated by the common signal input, resulting in an effective synchronization of the data signals 175 from the data acquisition processors 120, 135.

The data delivery rate of each data acquisition processor 120, 135 is a function of the rate at which it samples data. For each data acquisition processor 120, 135, this sample rate is performed using on-chip timers, set to sample the data at a predefined period. Specifically, the timers will repeatedly count from 0 to a predefined value, with a new sample collected at each timer restart. Synchronization will be implemented by adjusting this mechanism directly, either by moving the timer count ahead or behind, depending on the direction of the synchronization required. The effect is that the sampling is adjusted in phase, and aligned with that of the common signal. This will occur each time phase misalignment between the data acquisition processors 120, 135 sampling timers and the common signal exceeds the adjustment threshold.

An additional component of this embodiment of the invention is enhanced noise-immunity. Under normal circumstances, the common signal 180 provided to each data acquisition processor 120, 135 will be uncorrupted. However, synchronization will still occur under noisy conditions, and with the resulting, associated corrupted common signal 180 arriving at the processors. This is done by monitoring for, and rejecting, "outlier" samples that occur under these conditions, and that exceed the known range of valid readings. Rejected samples will be replaced with the last valid sample, for designated duration of continuously occurring noise and corrupted signal.

In the medical field, various embodiments of this invention will result in more accurate data presentation to medical personnel, with a likely associated increase in customer satisfaction, and enhanced marketing appeal. The most common method of synchronizing data streams from multiple processors is for them to use a shared CPU clock. However, this embodiment of the present invention was designed in a system that would not easily allow for this type of approach, primarily as a result of a requirement that the data acquisition processors 120, 135 systems be electrically isolated from each other. In this environment, it is easier to deliver the lower frequency common signal 180 of this invention, and use it to adjust the phase of the sampling on the data acquisition processors 120, 135, resulting in a more robust solution and reduced technical risk. Furthermore, this phase compensation is performed on each data acquisition processor 120, 135 separately, resulting in the data streams 175 from both being synchronized to the common signal 180, and to each other. Without such a common signal, data delivered 175 from the data acquisition processors 120, 135 would drift apart, making diagnosis derived from comparison of the associated data sets difficult and inaccurate. Other cruder methods of compensating for this drift are possible, like dropping a sample from the data streams every so often. But these types of approaches result in large data discontinuities at the point of adjustment, and significant amounts of drift before it is applied. Complex, downstream adjustments to the data are also required, whereas the present invention performs the compensation at the optimal, earliest stage of its collection. A novel approach to noise immunity is provided by this invention as well, by allowing synchronization of the data acquisition processors 120, 135 in the presence of noise. It will overcome reasonable and expected levels of noise corruption, by rejecting and compensating for "outlying" samples of the common signal, and without negative effect on the overall synchronization.

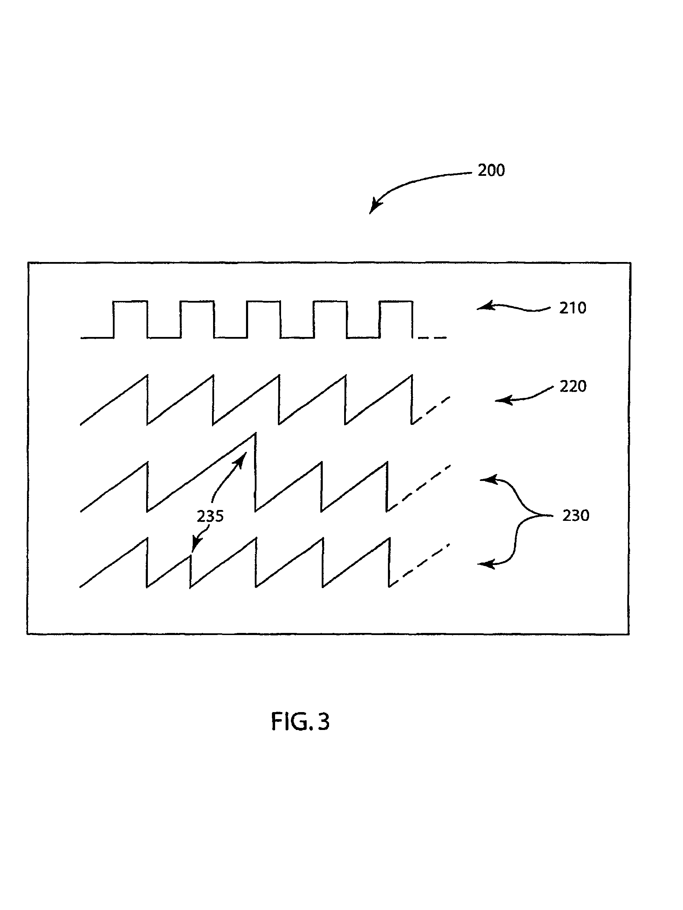

Referring now to Figure 3, a signal profile 200 of the signals discussed previously in accordance with the present invention is depicted. The signal 210 represents the common signal produced by the administrative processor 105 (Figure 2), and utilized by the data acquisition processors 120, 135 to synchronize the data signals 175. The digital control signal 160 instructs the A/D 150 at what rate to sample the analog signal, and the resultant digital signal 165 is sent to the data acquisition processors 120, 135. The signal 220 is a representation of a normal timer count, in other words, a timer count 220 that would ordinarily be used by a data acquisition processor 120, 135. The adjusted timer count signals 230 show an adjusted saw tooth 235, as would be implemented in the present invention when the drift exceeds a predetermined level. Here, the adjusted saw tooth 235 of the adjusted timer count signal 230 represents the timer of the data acquisition processor 120, 135 being adjusted up or down when the drift exceeds a predetermined level. The adjusted digital control signal 160 to the A/D 150, 155 will result in synchronizing the data delivery rate.

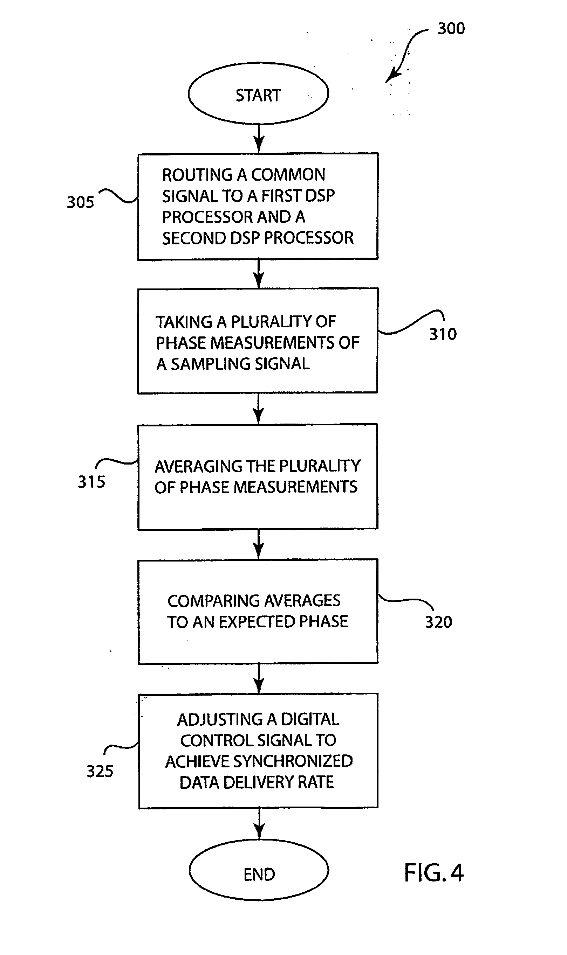

The synchronizing method 300 of the present invention is further depicted in Figure 4. In step 305, a common signal is routed to a first data acquisition processor and a second data acquisition processor. In step 310, a plurality of phase measurements of a sampling signal are taken by the data acquisition processors. In step 315, the plurality of phase measurements taken in the data acquisition processors are averaged, and the averages are compared in step 320 to an expected phase. If the averages exceed the expected phase by a predetermined amount, in step 325 the digital control signals are adjusted, such that the sampling rates are modified, resulting in synchronized data delivery in step 325.

The present invention has been described in terms of specific embodiments incorporating details to facilitate the understanding of the principles of construction and operation of the invention. Such reference herein to specific embodiments and details thereof is not intended to limit the scope of the claims appended hereto. It will be apparent to those skilled in the art that modifications may be made in the embodiment chosen for illustration without departing from the spirit and scope of the invention.

### PARTS LIST

| Component Part | Reference Number | Figure Number |
|---|---|---|
| Phase Lock Loop | 10 | Figure 1 |
| Phase Detector | 15 | Figure 1 |
| Loop Filter | 20 | Figure 1 |
| Voltage Controlled Oscillator (VCO) | 25 | Figure 1 |
| N Counter | 30 | Figure 1 |
| Input Frequency (Fᵢₙ) | 35 | Figure 1 |
| Output Frequency (Fₒᵤₜ) | 40 | Figure 1 |
| VCO Frequency (F_{vco}) | 45 | Figure 1 |
| Phase Error Signal | 50 | Figure 1 |
| Synchronizing System | 100 | Figure 2 |
| Administrative Processor | 105 | Figure 2 |
| Data Acquisition Processor | 120 | Figure 2 |
| Data Acquisition Processor | 135 | Figure 2 |
| Common Signal Input 2 | 140 | Figure 2 |
| Sample Output 2 | 145 | Figure 2 |
| A/D 1 | 150 | Figure 2 |
| A/D 2 | 155 | Figure 2 |
| Synchronized Analog Signal | 160 | Figure 2 |
| Synchronized Digital Signal | 165 | Figure 2 |
| Signal Profile | 200 | Figure 3 |
| Common Signal | 210 | Figure 3 |
| Normal Timer Count | 220 | Figure 3 |
| Adjusted Timer Count | 230 | Figure 3 |
| Adjusted Sawtooth | 235 | Figure 3 |
| Synchronizing Method | 300 | Figure 4 |
| Step | 305 | Figure 4 |
| Step | 310 | Figure 4 |
| Step | 315 | Figure 4 |
| Step | 320 | Figure 4 |
| Step | 325 | Figure 4 |
| Data Signal | 175 | Figure 2 |
| Common Signal | 180 | Figure 2 |

## Claims

1. A method of synchronizing a set of data streams, the method comprising:
a. routing (305) a common signal to a first data acquisition (120) processor and a second data acquisition processor (135), wherein the common signal triggers the first and second data acquisition processors (120,135) to take a plurality of phase measurements (310) of a sampling signal;
b. averaging (315) the plurality of phase measurements;
c. comparing (320) the averaged phase measurements of each of the first and second data acquisition processors (120, 135) to an expected phase; and
d. adjusting (325) a digital control signal of either one of the first and second data acquisition processors (120, 135) when the difference between the average phase measurement of either data acquisition processor (120, 135) and the expected phase exceeds a maximum drift rate.

2. The method according to claim 1, wherein the common signal is generated by an administrative processor (105).

3. A system for synchronizing a set of data streams, the system comprising:
a. a first data acquisition processor (120) and a second data acquisition processor (135), the first and second data acquisition processors (120, 135) configured to receive a common signal; and
b. an administrative processor (105) configured to receive a data signal from each of the data acquisition processors (120, 135) and to generate the common signal,
wherein the first and second data acquisition processors (120, 135) take a plurality of phase measurements of a sampling signal and average the phase measurements when the common signal is received, and further wherein the first and second data acquisition processors (120, 135) compare the average phase measurements to an expected phase, such that a digital control signal of either one of the first and second data acquisition processors is adjusted when the difference between the average phase measurements and the expected phase exceeds a maximum drift rate.

4. A method of synchronizing a set of data streams, the method comprising:
a. generating a common signal with an administrative processor (105);
b. routing (305) the common signal to a first data acquisition processor (120) and a second data acquisition processor, wherein the common signal triggers the first and second data acquisition processors (120, 135) to take a plurality of phase measurements (310) of a sampling signal;
c. averaging (315) the plurality of phase measurements;
d. comparing (320) the averaged phase measurements of each of the first and second data acquisition processors (120, 135) to an expected phase; and
e. adjusting (325) a digital control signal of either one of the first and second data acquisition processors (120, 135) when the difference between the average phase measurement of either data acquisition processor (120, 135) and the expected phase exceeds a maximum drift rate.
